(19)

Europäisches Patentamt

European Patent Office

Office européen des brevets

(11) **EP 3 083 183 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(21) Anmeldenummer: **14824412.2**

(22) Anmeldetag: **15.12.2014**

(51) Int Cl.:
**B29C 45/14** *(2006.01)*    **B44C 1/22** *(2006.01)*

(86) Internationale Anmeldenummer:
**PCT/EP2014/077807**

(87) Internationale Veröffentlichungsnummer:
**WO 2015/091383 (25.06.2015 Gazette 2015/25)**

(54) **KUNSTSTOFFFORMTEIL UND VERFAHREN ZU DESSEN HERSTELLUNG**

PLASTIC MOLDED PART AND METHOD FOR PROVIDING THE SAME

MOULAGE PLASTIQUE ET PROCEDE DE PRODUCTION DE CELUI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 DE 102013114276**

(43) Veröffentlichungstag der Anmeldung:
**26.10.2016 Patentblatt 2016/43**

(73) Patentinhaber: **Leonhard Kurz Stiftung & Co. KG
90763 Fürth (DE)**

(72) Erfinder:
• **DECKERT, Klaus
92353 Postbauer-Heng (DE)**
• **HAHN, Martin
91567 Herrieden (DE)**

(74) Vertreter: **Louis Pöhlau Lohrentz
Patentanwälte
Postfach 30 55
90014 Nürnberg (DE)**

(56) Entgegenhaltungen:
EP-A1- 1 413 417        EP-A1- 1 743 756
WO-A1-2010/105780   WO-A1-2012/163677

DE-A1- 19 702 977        DE-A1- 19 758 496
DE-A1-102004 012 937    DE-A1-102007 020 308
DE-A1-102011 050 585    DE-B4-102005 006 074
US-A- 4 965 037          US-A1- 2003 122 278
US-A1- 2007 012 771      US-A1- 2011 195 224
US-B1- 6 277 312

• **"Laserbeschriftung - Wikipedia", , 23. Oktober 2013 (2013-10-23), XP055172261, Gefunden im Internet:
URL:http://de.wikipedia.org/w/index.php?title=Laserbeschriftung&oldid=123717249 [gefunden am 2015-02-26]**
• **"Das Tiefdruckverfahren - APPL Blog", , 5. Dezember 2013 (2013-12-05), XP055172396, Gefunden im Internet:
URL:https://web.archive.org/web/20131205002209/http://blog.appl.de/das-tiefdruckverf ahren [gefunden am 2015-02-26]**
• **"Achieving design and function in a single molding cycle", , 10. Oktober 2012 (2012-10-10), XP055172586, Gefunden im Internet:
URL:http://www.kurz.de/kurzweb/en/home.nsf/?Open&DirectURL=981BBB634379BC2BC1257 A930 03E6B60 [gefunden am 2015-02-27]**
• **"PolyIC Webseite", , 30. April 2012 (2012-04-30), XP055172576, Gefunden im Internet:
URL:http://www.polyic.com/fileadmin/images/content-images/produkte/PolyTC-D_2012.pdf [gefunden am 2015-02-27]**

**Beschreibung**

Die Erfindung betrifft ein Kunststoffformteil sowie ein Verfahren zu dessen Herstellung.

Um Kunststoffformteile mit dekorativen Oberflächen zu schaffen, ist es bekannt, Dekorfolien in Spritzgussformen einzulegen und mit einer Kunststoffmasse zu hinterspritzen.

An die Oberflächen derartiger Formteile werden hohe Ansprüche gestellt. Insbesondere müssen diese gegenüber Substanzen, mit denen sie in der täglichen Benutzung in Kontakt kommen, wie beispielsweise Fingerabdrücken, Nagellackentferner und dergleichen, resistent sein und auch mechanischen Belastungen weitestmöglich ohne Verkratzung widerstehen. Ebenso werden an die Oberflächen derartiger Formteile hohe optische Ansprüche gestellt, die Oberfläche soll also optisch hochwertig und/oder attraktiv wirken.

Um eine gute Widerstandsfähigkeit der Oberflächen und/oder ein gewünschtes optisches Erscheinungsbild der Oberfläche zu erreichen, ist es üblich, auf die Formteile nach dem Aushärten der Kunststoffmasse mittels Nasslackierung noch wenigstens eine Schutzlackschicht aufzubringen. Mittels dieser Nasslackierung können dabei auch weitere Dekorelemente aufgebracht werden.

Ein solcher Lackierungsschritt macht jedoch die Fertigung des Kunststoffformteils deutlich aufwändiger und kostenintensiver. Gleichzeitig können damit nicht immer die gewünschten Toleranzen bei der Platzierung der Dekorelemente erreicht werden.

Aus der US 2003/0122278 A1 ist ein Verfahren bekannt, bei den zwei transparente Dekorfolien, beispielsweise durch Bedrucken, mit einem Dekorelement versehen werden. Die beiden Dekorfolien werden in ein Spritzgiessform eingelegt und hinterspritzt. Die Spritzgussform weist zwei Formhälften auf, die gemeinsam eine Kavität zum Abformen des Kunststoffteils ausbilden. Die beiden Dekorfolien werden an gegenüberliegenden Wandungen der Kavität angebracht. Beim Hinterspritzen bildet eine der Dekorfolien eine Rückseite, und die andere der Dekorfolien eine vorderseitige Oberfläche des Kunststoffteils aus. Das Kunststoffteil dient als Displayabdeckung und wird somit nachfolgend mit einer Hinterleuchtungsvorrichtung verbunden.

Es ist die Aufgabe der vorliegenden Erfindung, ein Kunststoffformteil und ein Verfahren zu dessen Herstellung anzugeben.

Diese Aufgabe wird durch ein Verfahren mit den Merkmalen des Patentanspruchs 1 sowie durch ein Kunststoffformteil mit den Merkmalen des Patentanspruchs 14 gelöst.

Ein derartiges Verfahren zum Herstellen eines Kunststoffformteils umfasst die Schritte:

a) Bereitstellen einer ersten Dekorfolie, welche zumindest partiell mit einer opaken Beschichtung versehen ist;

b) Einbringen zumindest eines Dekorelements eines Dekors in die erste Dekorfolie durch Bearbeiten mittels eines Bearbeitungswerkzeugs;

c) Bereitstellen einer zweiten Dekorfolie;

d) Einlegen der Dekorfolien in eine Spritzgussform mit einer ersten und zweiten Formhälfte, die gemeinsam eine Kavität zum Abformen des Kunststoffformteils ausbilden, wobei die erste Dekorfolie an einer ersten Wandung der Kavität und die zweite Dekorfolie an einer zweiten, der ersten Wandung gegenüber liegenden Wandung der Kavität angebracht wird;

e) Hinterspritzen der Dekorfolien mit einer Kunststoffmasse, so dass die erste Dekorfolie eine erste Oberfläche und die zweite Dekorfolie eine zweite, der ersten Oberfläche gegenüberliegende Oberfläche des Kunststoffformteils ausbildet.

Mit einem solchen Verfahren wird ein Kunststoffformteil erhalten, welches eine erste Dekorfolie umfasst, welche zumindest partiell eine opake Beschichtung aufweist, in welche ein Dekor eingebracht ist, und welches eine zweite Dekorfolie umfasst, wobei die erste Dekorfolie eine erste Oberfläche und die zweite Dekorfolie eine zweite, der ersten Oberfläche gegenüberliegende Oberfläche des Kunststoffformteils ausbildet.

In Schritt b) kann das Einbringen des zumindest eines Dekorelements eines Dekors in die erste Dekorfolie insbesondere durch Laserstrahlung und/oder durch Fräsen und/oder Stanzen erfolgen. Das Bearbeitungswerkzeug ist also vorzugsweise ein Laser, ein Fräswerkzeug und/oder ein Stanzwerkzeug.

Die beiden Dekorfolien bilden vorzugsweise einen Schutz für beide Oberflächen des Kunststoffformteils aus, so dass dieses besonders beständig ist. Es kann daher auf eine Nasslackierung des Kunststoffformteils nach dem Aushärten der Kunststoffmasse verzichtet werden, so dass unmittelbar das fertige Teil erhalten wird. Die erste Dekorfolie bildet im montierten Zustand des Kunststoffformteils vorzugsweise dessen Rückseite aus, so dass die optische Qualität der opaken Schicht nicht übermäßig hoch sein muss. Es ist lediglich von Bedeutung, dass das insbesondere durch Laserbestrahlung, Fräsen oder Stanzen eingebrachte Dekor, welches später vorzugsweise hinterleuchtet wird, von hoher Qualität ist.

Gleichzeitig erhält man durch die Kombination der beiden Dekorfolien eine besonders hohe Designfreiheit und Präzision. Die beiden Folien weisen vorzugsweise sich ergänzende Dekorelemente oder Designelemente auf, beispielsweise komplementäre Muster, die sich beispielsweise bei Betrachtung und/oder Hinterleuchtung zu einem Gesamt-Design oder Gesamt-Dekor ergänzen und/oder bei der Betrachtung aus unterschiedlichen Winkeln einen optisch variablen Effekt ergeben.

Die erreichbaren Toleranzen liegen beim Einbringen des Designs im Bereich vom +/-0,1 mm, während bei alternativen Verfahren, beispielsweise der Verwendung von vorgestanzten Transferfolien bei kleinen Teilen lediglich Toleranzen von +/- 0,2 mm und bei größeren Teilen von lediglich +/- 1 mm erreichbar sind.

Die Laserbestrahlung, das Fräsen oder Stanzen ist zudem nicht an fixierte Designs gebunden. So ist es beispielsweise möglich, individualisierte Designs oder hochflexible Kleinserien ohne Zusatzaufwand zu fertigen. Der Laser oder der Fräskopf wird dabei elektronisch angesteuert, wobei Steuerungssignale die Position des Laserstrahls, Fräskopfs oder des Stanzmessers auf der Oberfläche des Formteils steuern. Die Steuerungssignale können teilespezifisch, d.h. für jedes einzelne Formteil oder für eine bestimmte Anzahl von Formteilen modifiziert werden.

Ein Stanzmesser oder Stanzstempel ist insbesondere dann von Vorteil, wenn man großflächigere Dekore oder Dekorelemente einbringen will und dieses Einbringen mit einem feinstrukturierenden Werkzeug wie einem Laserstrahl oder Fräskopf zu lange dauern würde. Ebenso sinnvoll ist der Einsatz eines Stanzmessers oder Stanzstempels, wenn das Dekor oder die Dekorelemente immer wieder gleichartige, wiederkehrende Motive aufweist, z.B. Kreise, Punkte, Sterne, Symbole, Buchstaben.

Bevorzugt wird das Dekor und/oder das mindestens eine Dekorelement nach dem Hinterspritzen durch Laserbestrahlung, Fräsen oder Stanzen in die erste Dekorfolie eingebracht. Dadurch ist es möglich, das Dekor und/oder das mindestens eine Dekorelement besonders genau zu platzieren bzw. zu positionieren, weil wichtige, die Platzierung und/oder Positionierung des Dekors und/oder der mindestens einen Dekorelements störenden oder negativ beeinflussenden Arbeitsschritte (insbesondere das Positionieren der Dekorfolien in der Spritzgussform und das Hinterspritzen) bereits erfolgt sind.

Alternativ ist es jedoch auch möglich, dass das Dekor und/oder das mindestens eine Dekorelement vor dem Hinterspritzen, insbesondere vor dem Einlegen der ersten Dekorfolie in die Spritzgussform, durch Laserbestrahlung, Fräsen oder Stanzen in die erste Dekorfolie eingebracht wird.

Beim Einbringen des Dekors und/oder des mindestens einen Dekorelements in die erste Dekorfolie durch Laserbestrahlung, Fräsen, oder mittels eines anderen Bearbeitungswerkzeugs wird die opake Beschichtung in dem mit dem Bearbeitungswerkzeug bearbeiteten Bereich zumindest teilweise entfernt und/oder die Opazität der opaken Beschichtung in dem mit dem Bearbeitungswerkzeug bearbeiteten Bereich verringert.

Durch die Laserbestrahlung, das Fräsen oder das Stanzen kann die opake Beschichtung präzise ablatiert werden, um so zu hinterleuchtende Symbole oder andere Dekorelemente einzubringen. Dabei wird das Material der opaken Beschichtung dort, wo es von dem Laserstrahl getroffen wird, erhitzt und verdampft und dadurch abgetragen. Im Falle des Fräsens oder Stanzens wird das Material der opaken Beschichtung mechanisch entfernt.

Hierfür eignen sich Materialien wie opake Farblackschichten mit einer hohen Pigmentierung, beispielsweise Rußpigmente, beispielsweise aus Pigmenten in einem polymeren, meist transparenten Bindemittel, wobei der Anteil und die Art der Pigmente die Opazität des Lacks bestimmt, Metallschichten aus Aluminium, Chrom oder Kupfer oder dergleichen. Eine Metallschicht aus aufgedampften und dabei Cluster bildendem Zinn als nichtleitende Metallschicht (sogenannte NCVM-Schichten (NCVM = Non-Conductive Vacuum Metallization)) ist ebenso möglich. Auch Materialien, die bei der Laserbestrahlung ihre optischen Eigenschaften, insbesondere ihre Opazität oder Transparenz ändern, können als Material für die opake Beschichtung verwendet werden.

Bevorzugt wird für die Laserbestrahlung ein Nd:YAG-Laser eingesetzt, der insbesondere Licht im infraroten Bereich aussendet. Die benötigte Intensität des Laserstrahls richtet sich nach der Art und Dicke der opaken Beschichtung sowie auch der Geschwindigkeit, mit der die opake Beschichtung entfernt werden soll.

Es hat sich bewährt, wenn die Pigmentierung der Farblackschicht so gewählt ist, dass eine Pigmentierungszahl PZ im Bereich von 1,5 cm³/g bis 120 cm³/g, insbesondere im Bereich von 5 cm³/g bis 120 cm³/g, liegt, wobei sich die Pigmentierungszahl PZ errechnet nach

$$PZ = \sum_{1}^{x} \frac{(m_P \times f)_x}{(m_{BM} + m_A)} \qquad \text{und} \qquad f = \frac{\ddot{O}Z}{d} \quad ,$$

wobei gilt:

$m_P$ = Masse eines Pigments in der Farblackschicht in g,

$m_{BM}$ = konstant; Masse eines Bindemittels in der Farblackschicht in g,

$m_A$ = konstant; Masse Festkörper der Additive in der Farblackschicht in g,

ÖZ = Ölzahl eines Pigments (nach DIN 53199),

d = Dichte eines Pigments (nach DIN 53193),

x = Laufvariable, entsprechend der Anzahl an unterschiedlichen Pigmenten in der Farblackschicht.

Auf diese Weise lassen sich ausgehend von einer als geeignet befundenen

Zusammensetzung einer Farblackschicht schnell und unkompliziert dazu abweichende weitere mögliche Pigmentierungen errechnen.

Es hat sich als vorteilhaft erwiesen, wenn eine Pigmentierung der Farblackschicht so gewählt ist, dass eine Transmission T von sichtbarem Licht durch die opake Beschichtung kleiner als 50% ist. Die Transmission T, d.h. der Transmissionsgrad der opaken Beschichtung, wird insbesondere mit einem Spektralphotometer bestimmt, beispielsweise vom Typ Hitachi U-2000, wobei bevorzugt in einem Wellenlängenbereich zwischen 360 nm und 700 nm gemessen wird.

Nach Einbringen des Dekors und/oder des mindestens einen Dekorelements in die erste Dekorfolie weist vorzugsweise der mit dem Bearbeitungswerkzeug bearbeiteten Bereich und der nicht mit dem Bearbeitungswerkzeug bearbeiteten Bereich einen solchen Unterschied in der Transparenz auf, dass er von einem menschlichen Betrachter ohne Hilfsmittel in Durchlichtbetrachtung erkennbar ist. Dabei liegt der Unterschied der Transparenz bei zumindest 5 %, vorzugsweise bei mindestens 10% bis 75%. Hierdurch wird sichergestellt, dass ein hinreichender Kontrast im Dekor vorhanden ist, so dass ein scharfes und gut erkennbares Dekor entsteht.

Vorzugsweise wird die opake Beschichtung durch Drucken, insbesondere Siebdrucken oder Tiefdrucken aufgebracht wird. Der Druck kann dabei vollflächig oder partiell erfolgen. Es ist zudem möglich, mehrere Druckvorgänge nacheinander auszuführen, um den gewünschten Abdeckungsgrad bzw. die gewünschte Opazität zu erreichen. Dabei können auch noch zusätzliche Schichten, wie beispielsweise farbig transparente oder transluzente Schichten, Schutzlacke oder dergleichen, vollflächig oder partiell mit aufgedruckt werden.

Alternativ kann die opake Beschichtung mittels einer Transferfolie aufgebracht werden. Auch hier kann ein vollflächiger oder partieller Auftrag erfolgen. Eine solche Transferfolie umfasst üblicherweise eine Trägerschicht, eine optionale Ablöseschicht, sowie als Transferlage eine oder mehrere Dekorschichten, die unterschiedlich stark deckend sein können, und/oder eine Kleberschicht. Die Trägerschicht wird nach dem Aufbringen der Transferfolie abgezogen, wobei die Transferlage mit den übrigen Schichten auf der Dekorfolie verbleiben. Die opake Beschichtung wird dann von zumindest einer der Dekorschichten gebildet und besteht aus den bereits erwähnten Materialien.

Die opake Beschichtung weist vor dem Einbringen des Dekors eine Transparenz im für den Menschen sichtbaren Wellenlängenbereich von weniger als 50%, insbesondere von weniger als 20%, bevorzugt weniger als 5% aufweist. Dies stellt einen dunkel erscheinenden Hintergrund zur Verfügung, der einen guten Kontrast für die spätere Hinterleuchtung bietet.

Es ist ferner zweckmäßig, wenn die opake Beschichtung nach dem Einbringen des Dekors in dem mit dem Bearbeitungswerkzeug bearbeiteten Bereich eine Transparenz im für den Menschen sichtbaren Wellenlängenbereich von mehr als 50%, insbesondere von mehr als 75% aufweist. Damit wird ein gut erkennbarer Hinterleuchtungseffekt ermöglicht. Die Transparenz kann dabei auch bei unterschiedlichen für den Menschen sichtbaren Wellenlängen verschieden sein, so dass sich eine farbige Hinterleuchtung ergibt.

Bevorzugt weist die opake Beschichtung eine Schichtdicke von weniger als 100 $\mu$m, insbesondere in eine Schichtdicke zwischen 5 $\mu$m und 50 $\mu$m auf. Damit wird einerseits die benötigte Opazität sichergestellt und andererseits die Herstellung eines dünnen und gegebenenfalls flexiblen Kunststoffformteils sichergestellt.

Ferner ist es bevorzugt, wenn die erste Dekorfolie zumindest eine weitere zumindest partielle Beschichtung, insbesondere eine transparente oder transluzente farbige Beschichtung, eine Schutzlackbeschichtung und/oder eine Kleberbeschichtung aufweist. Solche Beschichtungen können wie oben erläutert durch Drucken oder mittels einer Transferfolie aufgebracht werden. Auch Kombinationen dieser Techniken sind möglich. Hierdurch können zusätzliche visuelle Effekte realisiert werden oder zusätzliche Funktionen in die Dekorfolie integriert werden.

Bevorzugt ist oder umfasst das Dekor und/oder das mindestens eine Dekorelement ein Logo, ein Symbol und/oder zumindest ein alphanumerisches Zeichen. Diese Elemente können auch mit abstrakten grafischen Designelementen als Dekorelemente kombiniert werden. Das Dekor kann eine rein verzierende Funktion besitzen, aber vorzugsweise auch funktional sein und beispielsweise Anzeige- oder Bedienungselemente eines Geräts, wie Statusanzeigen, Bedienflächen oder dergleichen markieren.

Vorzugsweise wird zumindest ein weiteres Dekorelement durch Stanzen in die erste Dekorfolie eingebracht wird. Dies erlaubt es, großflächige Aussparungen für Anzeigenelemente, für Hinterleuchtungen oder dergleichen vorzusehen, ohne dass eine langwierige Laser- oder Fräsbehandlung dieser Bereiche nötig wird.

Es ist weiter bevorzugt, wenn die erste Dekorfolie vor dem Einlegen in die Spritzgussform tiefgezogen wird.

Dadurch können sogenannte Inserts erzeugt werden, die vor dem Hinterspritzen insbesondere vergleichsweise so stark dreidimensional verformt werden können, wie es während des Hinterspritzens oftmals nicht möglich ist.

Hierbei können übliche Tiefziehverfahren angewendet werden. In der Regel wird die erste Dekorfolie als Bogenware bereitgestellt und in ein Tiefziehwerkzeug eingelegt, welches die gewünschte Endkontur aufweist. Durch die Applikation von Wärme, bevorzugt einer Temperatur von 80°C bis 200°C, wird die Dekorfolie verformbar gemacht. Nun kann die Folie durch Applikation von Vakuum und/oder durch Applikation eines Formstempels und/oder Luftüberdruck an die Form des Tiefziehwerkzeuges angepasst und damit in die gewünschte Endkontur gebracht werden. Beim Abkühlen härtet das Material der ersten Dekorfolie dann wieder aus, so dass diese die Endkontur beibehält.

Nach dem Tiefziehen kann gegebenenfalls noch eine mechanische Nachbearbeitung erfolgen, beispielsweise durch Beschneiden (mechanisch oder mittels Laser), Fräsen, Stanzen oder dergleichen.

Bevorzugt weist die erste Dekorfolie dabei eine Dicke von 50 $\mu$m bis 2000 $\mu$m auf. Damit wird einerseits eine gute mechanische Stabilität sichergestellt und andererseits ein problemloses Umformen ermöglicht.

Vorzugsweise weist die erste Dekorfolie zumindest eine Lage aus einem farblosen oder farbigen transparenten oder transluzenten thermoplastischen Material auf, insbesondere aus ABS, ABS/PC, PC/ABS, PC, PP oder PMMA. Diese dient als Träger für die opake Beschichtung und eventuell vorhandene weitere Schichten, kann aber selbst hinterleuchtet werden. Durch die thermoplastische Natur der genannten Materialien ist eine problemlose Umformung möglich.

Das eingebrachte zumindest eine Dekorelement und/oder Dekor weist zumindest eine Linie mit einer Linienstärke von mindestens 50 $\mu$m, insbesondere von mind. 0,5 mm auf. Diese Linien können Bestandteil der oben genannten Dekorelemente sein oder können diese ausbilden, also beispielsweise Buchstaben, Symbole oder Logos ausbilden. Die minimale Linienstärke ist durch das Auflösungsvermögen und Wahrnehmungsvermögen des Auges bestimmt. Durch die Hinterleuchtung sind auch extrem feine Linien noch erkennbar. Die maximale Linienstärke bzw. die maximale Ausdehnung der Dekorelemente ist lediglich von der Art der Dekorelemente begrenzt.

Es ist weiter zweckmäßig, wenn die zweite Dekorfolie eine Trägerschicht, eine optionale Ablöseschicht und wenigstens eine davon ablösbare Dekorlage aufweist und dass die Trägerschicht nach dem Hinterspritzen von der Dekorlage abgezogen wird. Es handelt sich also um eine Transferfolie, wie sie schon anhand des Aufbringens der opaken Beschichtung auf die erste Dekorfolie beschrieben wurde. Die Trägerschicht kann dabei auch bis zum Einbau des Kunststoffformteils auf dem Kunststoffformteil verbleiben und so die Oberfläche während der Handhabung zusätzlich schützen.

Alternativ dazu kann die zweite Dekorfolie ähnlich wie die erste Dekorfolie ausgebildet sein. Dazu weist die zweite Dekorfolie bevorzugt zumindest eine Lage aus einem farblosen oder farbigen transparenten oder transluzenten thermoplastischen Material auf, insbesondere aus ABS, ABS/PC, PC/ABS, PC, PP oder PMMA. Diese dient als Träger für die Dekorlage der zweiten Dekorfolie.

In dieser alternativen Ausführung der zweiten Dekorfolie ist es wie bei der ersten Dekorfolie vorteilhaft, wenn die zweite Dekorfolie vor dem Einlegen in die Spritzgussform tiefgezogen wird. Dadurch können sogenannte Inserts erzeugt werden, die vor dem Hinterspritzen insbesondere vergleichsweise so stark dreidimensional verformt werden können, wie es während dem Hinterspritzen oftmals nicht möglich ist.

Hierbei können übliche Tiefziehverfahren angewendet werden. In der Regel wird die zweite Dekorfolie als Bogenware bereitgestellt und in ein Tiefziehwerkzeug eingelegt, welches die gewünschte Endkontur aufweist. Durch die Applikation von Wärme, bevorzugt einer Temperatur von 80°C bis 200°C, wird die Dekorfolie verformbar gemacht. Nun kann die Folie durch Applikation von Vakuum und/oder durch Applikation eines Formstempels und/oder Luftüberdruck an die Form des Tiefziehwerkzeuges angepasst und damit in die gewünschte Endkontur gebracht werden. Beim Abkühlen härtet das Material der zweiten Dekorfolie dann wieder aus, so dass diese die Endkontur beibehält.

Bevorzugt umfasst die Dekorlage der zweiten Dekorfolie wenigstens eine hochglänzende oder matte und/oder mit einer taktilen Struktur versehene Schutzlackschicht. Die Schutzlackschicht kann dabei farblos oder farbig transluzent oder transparent sein oder auch opake Bereiche aufweisen. Insbesondere ist es bevorzugt, wenn die Dekorlage ein weiteres Dekor ausbildet, welches mit dem wenigstens einen Dekorelement und/oder Dekor der ersten Dekorfolie zusammenwirkt.

Vorzugsweise wird zum Ausbilden der taktilen Struktur beim Hinterspritzen ein insbesondere taktiles Oberflächenrelief in die von der Kunststoffmasse abgewandte Oberfläche der zweiten Dekorfolie abgeformt, insbesondere aufgrund einer Musterschicht, die zwischen der Wandung der Kavität und einer Trägerfolie der zweiten Dekorfolie oder der zweiten Dekorfolie angeordnet ist.

Die taktile Struktur bildet sich also während des Spritzgießens, wenn die zweite Dekorfolie aufgrund der Hitze und des Drucks der eingespritzten Kunststoffmasse plastisch verformbar ist. Die Musterschicht kann dabei direkt von der Wandung der Kavität gebildet sein oder vorzugsweise durch einen separaten Einleger, insbesondere durch die Trägerfolie selbst, bereitgestellt werden.

Die zweite Dekorfolie ist zumindest bereichsweise transparent oder transluzent und weist eine Transparenz von 5% bis 100% auf. Auf diese Weise ist das hinterleuchtete wenigstens eine Dekorelement und/oder Dekor der ersten Dekorfolie auch von der Seite der zweiten Dekorfolie her gut zu erkennen. Es ist bevorzugt, wenn die Dekorfolien mit einem Abstand von 0,5 mm bis 10 mm, bevorzugt von 0,8 mm bis 5 mm in die Spritzgussform eingelegt werden. Dieser Abstand bestimmt die Wandstärke des fertigen Kunststoffformteils.

Es ist ferner bevorzugt, wenn zwischen die Dekorfolien zumindest ein Kern in die Spritzgussform eingebracht wird. Hierdurch können Hohlräume oder Aussparungen in das Kunststoffformteil eingebracht werden, die zur Aufnahme von Funktionselementen, beispielsweise separate Bauteile wie Displays, Schalter, Regler oder separate Hinterleuchtungsvorrichtungen und/oder Berührungssensoren oder dergleichen dienen können. Der Kern wird dabei bevorzugt durch eine Ausstanzung in der ersten Dekorfolie in den Zwischenraum zwischen den Dekorfolien eingeführt.

Nach dem Hinterspritzen wird auf der durch die erste Dekorfolie gebildeten Seite des Kunststoffformteils als ein Funktionselement eine Hinterleuchtungsvorrichtung und vorzugsweise zusätzlich ein Berührungssensor, angebracht, insbesondere geklebt oder laminiert, wird. Das Funktionselement kann zusätzlich elektrische Leitungen und/oder elektrische/elektronische Bauelemente aufweisen.

Auch die erste und/ oder zweite Dekorfolie selbst kann bevorzugt eine oder mehrere elektrische Funktionsschichten aufweisen, welche insbesondere eine Hinterleuchtungsvorrichtung oder ein oder mehrere Berührungssensoren, insbesondere kapazitive Berührungssensoren aufweist.

Mit allen beschriebenen Methoden können verschiedene Funktionselemente in das Kunststoffformteil integriert werden, so dass dieses Verwendung als Bedienvorrichtung, Anzeigeelement oder dergleichen finden kann.

Bevorzugt ist ferner die Spritzgussmasse transparent oder transluzent, insbesondere mit einer Transparenz von 5% bis 98%, bevorzugt aus einem der folgenden Materialien: ABS (Acrylnitril-Butadien-Styrol-Copolymerisat), PC (Polycarbonat), ABS/PC, PC/ABS, PMMA (Polymethylmethacrylat), PP (Polypropylen), PA (Polyamid), TPU (thermoplastisches Polyurethan).

Hierdurch kann eine gute Hinterleuchtung des Kunststoffformteils sichergestellt werden. Zur Verarbeitung der genannten Materialien eignet sich das Spritzgießen bei bevorzugten Temperaturen von 200°C bis 300°C. Der benötigte Spritzdruck ist insbesondere abhängig von Teilegröße, Teilegeometrie und Wandstärke und kann in einem großen Bereich schwanken.

Insbesondere durch die Variation der Transparenz der zweiten Dekorfolie und/oder der Spritzgussmasse und/oder des Kontrastes (Unterschied der Transparenz) in der ersten Dekorfolie können sehr unterschiedliche optische Effekte erzeugt werden.

Beispielsweise kann der Kontrast in der ersten Dekorfolie durch eine hochtransparente erste Trägerfolie und ein vollständiges Entfernen der sehr wenig transparenten opaken Beschichtung sehr hoch eingestellt sein. Bei Verwendung einer ebenso hochtransparenten Spritzgussmasse kann man die Sichtbarkeit der

Dekorelemente mit Hilfe der Transparenz der zweiten Dekorfolie steuern. Ist die zweite Dekorfolie ebenfalls hochtransparent, liegt eine sehr deutliche Sichtbarkeit der Dekorelemente vor, weil der in der ersten Dekorfolie eingestellte Kontrast auch durch die zweite Dekorfolie hindurch noch gut sichtbar ist. Ist die zweite Dekorfolie weniger transparent, kann man die Sichtbarkeit der Dekorelemente abschwächen und gleichzeitig einen Eindruck einer sehr hohen Opazität der zweiten Dekorfolie im nicht hinterleuchteten Zustand erwecken. Erst im hinterleuchteten Zustand ist dann erkennbar, dass die zweite Dekorfolie eigentlich nicht opak, sondern transluzent oder transparent ist.

Aber ebenso ist es möglich, die Transparenz und/oder den Kontrast der ersten Dekorfolie und deren Dekorelemente und/oder der Spritzgussmasse verringern. Die Transparenz der zweiten Dekorfolie ist dann nur noch zum Teil ausschlaggebend, wie stark oder deutlich die Dekorelemente durch sie hindurch sichtbar sind.

Im Folgenden werden exemplarische Ausführungsformen eines solchen Kunststoffformteils und Verfahren zu dessen Herstellung anhand der Zeichnung näher erläutert. Dabei zeigen:

Fig. 1     Eine schematische Schnittdarstellung durch ein Ausführungsbeispiel eines Kunststoffformteils mit einer vorderseitigen und einer rückseitigen Dekorfolie;

Fig. 2     Eine schematische Ansicht einer Dekorfolie für ein Kunststoffformteil nach Fig. 1;

Fig. 3     Eine schematische Schnittansicht durch ein Spritzgusswerkzeug im geöffneten Zustand;

Fig. 4     Eine schematische Schnittansicht durch das Spritzgusswerkzeug nach Fig. 3 im geschlossenen Zustand;

Fig. 5     Eine schematische Darstellung verschiedener Designvarianten eines Kunststoffformteils.

Ein Kunststoffformteil 1, insbesondere für eine Bedien- oder Anzeigefläche eines Geräts, umfasst eine erste Dekorfolie 11, eine zweite Dekorfolie 12 und einen Grundkörper 13, wobei die Dekorfolien 11 und 12 auf gegenüberliegenden Seiten des Grundkörpers 13 angeordnet sind. Die erste Dekorfolie 11 bildet in einer späteren Einbaulage des Kunststoffformteils 1 dessen Rückseite, die zweite Dekorfolie 12 dessen, einem Benutzer zugewandte, Vorderseite.

Die erste Dekorfolie 11 weist einen mehrschichtigen Aufbau auf und umfasst zumindest eine Trägerlage 111 und eine opake Beschichtung 112. Die Trägerlage 111 besitzt bevorzugt eine Schichtdicke von 50 $\mu$m bis 2000 $\mu$m, insbesondere von 100 $\mu$m bis 1000 $\mu$m und besteht aus einem transparenten oder transluzenten thermoplastischen Kunststoff, insbesondere aus ABS, ABS/PC, PC/ABS, PC, PP oder PMMA, PA, TPU.

Die opake Beschichtung 122 besteht aus einem opaken Lack, beispielsweise einer oder mehreren opaken Farblackschichten mit einem hohen Anteil an Pigmenten, beispielsweise Rußpigmenten, und/oder aus einem Metall wie Aluminium oder Kupfer oder dergleichen. Die opake Beschichtung 122 kann bevorzugt durch Drucken, insbesondere Siebdrucken oder Tiefdrucken aufgebracht wird. Der Druck kann dabei vollflächig oder partiell erfolgen. Es ist zudem möglich, mehrere Druckvorgänge nacheinander auszuführen, um den gewünschten Abdeckungsgrad bzw. die gewünschte Opazität zu erreichen. Dabei können auch noch zusätzliche Schichten 113, wie beispielsweise farbig transparente oder transluzente Schichten, Schutzlacke oder dergleichen, vollflächig oder partiell mit aufgedruckt werden.

Alternativ kann die opake Beschichtung 112 mittels einer Transferfolie aufgebracht werden. Auch hier kann ein vollflächiger oder partieller Auftrag erfolgen. Eine solche Transferfolie umfasst üblicherweise eine Trägerschicht, eine optionale Ablöseschicht sowie eine davon ablösbare Transferlage mit einer oder mehreren Dekorschichten 113, die unterschiedlich stark deckend sein können, und/oder eine Kleberschicht. Die Trägerschicht wird nach dem Aufbringen der Transferlage auf die Dekorfolie 11 abgezogen, wobei die übrigen Schichten 112, 113 auf der Dekorfolie 11 verbleiben.

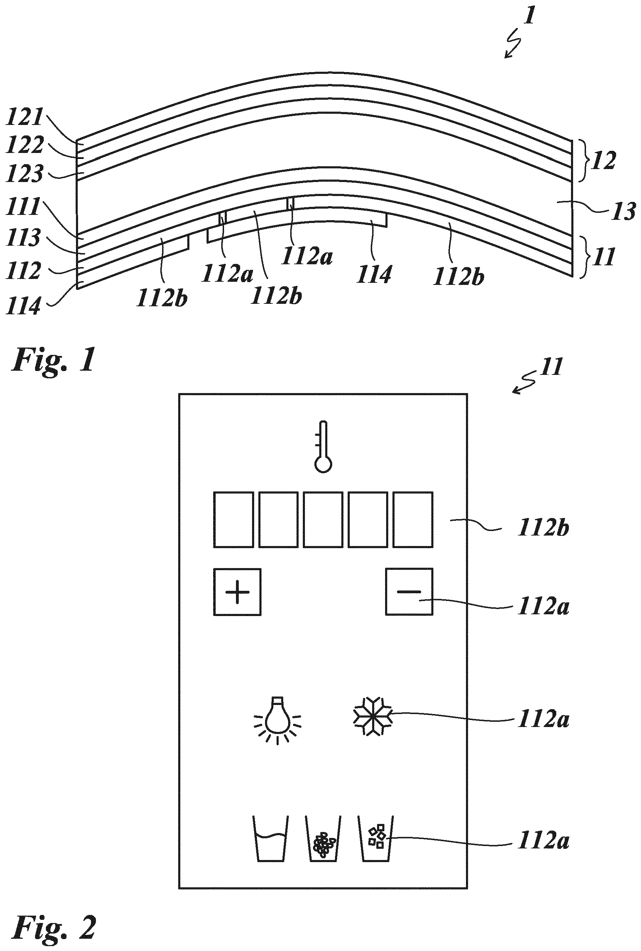

Durch Laserbestrahlung, Fräsen oder Stanzen kann die opake Beschichtung 112 präzise von der Dekorfolie 11 entfernt werden, um so zu hinterleuchtende Symbole oder andere Dekorelemente einzubringen. Ein Beispiel für ein solches Dekor ist in Fig. 2 gezeigt. Dabei wird das Material der opaken Beschichtung 112 in den Bereichen 112a, wo es von dem Laserstrahl getroffen wird, erhitzt und verdampft und dadurch abgetragen. Im Falle des Fräsens oder Stanzens wird das Material der opaken Beschichtung 112 in den Bereichen 112a mechanisch entfernt.

Auch Materialien, die bei der Laserbestrahlung ihre optischen Eigenschaften, insbesondere ihre Opazität oder Transparenz ändern, beispielsweise spezielle bleichbare Pigmente oder Pigmente, die mittels geeigneter Laserstrahlung einen Farbumschlag zeigen, können verwendet werden.

Bevorzugt wird für die Laserbestrahlung ein Nd:YAG-Laser eingesetzt, der insbesondere Licht im infraroten Bereich aussendet. Die benötigte Intensität des Laserstrahls richtet sich nach der Art und Dicke der opaken Beschichtung sowie auch der Geschwindigkeit, mit der die opake Beschichtung entfernt werden soll.

Die mit dem Bearbeitungswerkzeug bearbeiteten Bereiche 112a bilden vorzugsweise Linien mit einer Linienstärke von mindestens 50 $\mu$m, insbesondere von mind. 0,5 mm aus, die Dekorelemente wie Buchstaben, Zahlen, Symbole oder Logos formen. Die minimale Linienstärke ist durch das Auflösungsvermögen und Wahrnehmungsvermögen des Auges bestimmt. Durch die Hinterleuchtung sind auch extrem feine Linien noch erkennbar. Die maximale Linienstärke bzw. die maximale Ausdehnung der Dekorelemente ist lediglich von der Art der Dekorelemente begrenzt.

Nach Einbringen des Dekors in die erste Dekorfolie 11 weisen vorzugsweise die mit dem Bearbeitungswerkzeug bearbeiteten Bereiche 112a und die nicht mit dem Bearbeitungswerkzeug bearbeiteten Bereiche 112b einen Unterschied in der Transparenz von zumindest 10 %, vorzugsweise von 20% bis 75%, aufweisen. Hierdurch wird sichergestellt, dass ein hinreichender Kontrast im Dekor vorhanden ist, so dass ein scharfes und gut erkennbares Dekor entsteht.

Bevorzugt weist die opake Beschichtung 112 vor dem Einbringen des eine Transparenz im für den Menschen sichtbaren Wellenlängenbereich vorzugsweise von weniger als 50%, insbesondere von weniger als 20%, bevorzugt weniger als 5% aufweist. Dies stellt einen dunkel erscheinenden Hintergrund zur Verfügung, der einen guten Kontrast für die spätere Hinterleuchtung bietet.

Nach dem Einbringen des Dekors weist die opake Beschichtung 112 in dem mit dem Bearbeitungswerkzeug bearbeiteten Bereich 112a eine Transparenz im für den Menschen sichtbaren Wellenlängenbereich von mehr als 50 %, insbesondere von mehr als 75% auf. Damit wird ein gut erkennbarer Hinterleuchtungseffekt ermöglicht. Die Transparenz kann dabei auch bei unterschiedlichen für den Menschen sichtbaren

Wellenlängen verschieden sein, so dass sich eine farbige Hinterleuchtung ergibt.

Die opake Beschichtung 112 besitzt vorzugsweise eine Schichtdicke von weniger als 100 $\mu$m, insbesondere in einer Schichtdicke zwischen 5 $\mu$m und 50 $\mu$m auf. Damit wird einerseits die benötigte Opazität sichergestellt und andererseits die Herstellung eines dünnen und gegebenenfalls flexiblen Kunststoffformteils sichergestellt. Insgesamt weist die erste Dekorfolie 11 bevorzugt eine Schichtdicke von 50 $\mu$m bis 2000 $\mu$m auf.

An der Rückseite der ersten Dekorfolie 11 können noch weitere Funktionselemente 114 angebracht sein. Dabei kann es sich um insbesondere eine Hinterleuchtungsvorrichtung oder ein oder mehrere Berührungssensoren, insbesondere kapazitive Berührungssensoren, handeln. Auch die Dekorfolie 11 selbst kann eine oder mehrere elektrische Funktionsschichten aufweisen, welche insbesondere eine Hinterleuchtungsvorrichtung oder ein oder mehrere Berührungssensoren, insbesondere kapazitive Berührungssensoren aufweist.

Die zweite Dekorfolie 12 in der Ausführung als Transferfolie umfasst eine Trägerschicht 121, eine optionale Ablöseschicht und wenigstens eine Dekorlage 122, 123. Die Trägerschicht 121 wird nach dem Aufbringen der zweiten Dekorfolie 12 von der Dekorlage 122, 123 abgezogen wird. Trägerschicht 121 und Ablöseschicht sind im fertigen Bauteil also nicht mehr vorhanden. Die Trägerschicht 121 kann aber auch, wie in Fig. 1 gezeigt, bis zum Einbau des Kunststoffformteils 1 auf dem Kunststoffformteil 1 verbleiben und so die Oberfläche während der Handhabung zusätzlich schützen.

Die Trägerschicht 121 besteht bevorzugt aus PET (Polyethylenterephthalat) oder PMMA, PC und besitzt eine Schichtdicke von 6 μm bis 50 μm

In der alternativen Ausführung als insbesondere tiefgezogenes Insert weist die Trägerschicht 121 der zweiten Dekorfolie 12 eine Schichtdicke von bevorzugt 50 μm bis 2000 μm, insbesondere von 100 μm bis 1000 μm auf und besteht aus einem transparenten oder transluzenten thermoplastischen Kunststoff, insbesondere aus ABS, ABS/PC, PC/ABS, PC, PP oder PMMA, PA, TPU. Die Trägerschicht 121 weist dabei keine Ablöseschicht auf und dient aus Träger für die Dekorlage 122, 123.

Die wenigstens eine Dekorlage 122, 123 umfasst wenigstens eine hochglänzende oder matte und/oder mit einer taktilen Struktur, beispielsweise eine gebürstete Oberfläche, versehene Schutzlackschicht 122. Die Oberflächeneffekte können dabei auch partiell vorliegen bzw. nebeneinander liegende Flächen bilden. Die Schutzlackschicht 122 kann dabei farblos oder farbig transluzent oder transparent sein oder auch opake Bereiche aufweisen.

Der Schutzlack der Schutzlackschicht 122 ist dabei bevorzugt ein strahlungsgehärteter Lack wie beispielsweise ein physikalisch trocknendes Bindemittelsysteme auf Basis von Polyacryl- und PU-Harzen, der nach Fertigstellung des Kunststoffformteils 1 noch endgehärtet werden kann. Dies erfolgt bevorzugt durch Bestrahlung bei einer Wellenlänge von 200 nm bis 400 nm.

Vorzugsweise ist die zweite Dekorfolie 12 zumindest bereichsweise transparent oder transluzent und weist insbesondere eine Transparenz von 20% bis 100% auf. Auf diese Weise ist das hinterleuchtete wenigstens eine Dekorelement und/oder Dekor der ersten Dekorfolie 11 auch von der Seite der zweiten Dekorfolie 12 her gut zu erkennen.

Insgesamt beträgt die Schichtdicke der zweiten Dekorfolie 12 in der Ausführung als Transferfolie vorzugsweise etwa 10 μm bis 100 μm, wobei die Dekorlagen 122, 123 bevorzugt jeweils eine Schichtdicke von 1 μm bis 50 μm aufweisen. In der Ausführung als Insert beträgt die gesamte Schichtdicke der zweiten Dekorfolie 12 vorzugsweise etwa 50 μm bis 2000 μm, wobei die Dekorlagen 122, 123 jeweils eine Schichtdicke von 1 μm bis 50 μm aufweisen.

Ferner kann die Dekorlage 122, 123 ein weiteres Dekor ausbildet, welches mit dem Dekor der ersten Dekorfolie 11 zusammenwirkt. Beispielsweise können die beiden Dekorfolien 11, 12 jeweilige Muster aufweisen, die in der Überlagerung das gewünschte endgültige Dekor zeigen. Es ist auch möglich, den Abstand zwischen den Dekorfolien 11, 12 auszunutzen, um beispielsweise durch Parallaxeneffekte ein optisch variables Design zu schaffen.

Der Grundkörper 13 ist vorzugsweise aus einem transparenten oder transluzenten thermoplastischen Kunststoff, bevorzugt Acrylnitril-Butadien-Styrol-Copolimerisat (ABS), Polycarbonat (PC), Polypropylen (PP), Polymethylmethacrylat (PMMA) oder ein Gemisch aus Polycarbonat und Acrylnitril-Butadien-Styrol-Copolimerisat (PC/ABS), ausgebildet.

Die Transparenz des Grundkörpers 13 beträgt vorzugsweise von 5% bis 98% Die Schichtdicke des Grundkörpers 13 beträgt vorzugsweise 0,5 mm bis 10 mm, bevorzugt von 0,8 mm bis 5 mm. In den Grundkörper 13 können ferner noch Hohlräume oder Aussparungen eingebracht sein, in die weitere Funktionselemente, wie Anzeigen oder Sensoren, integriert werden können.

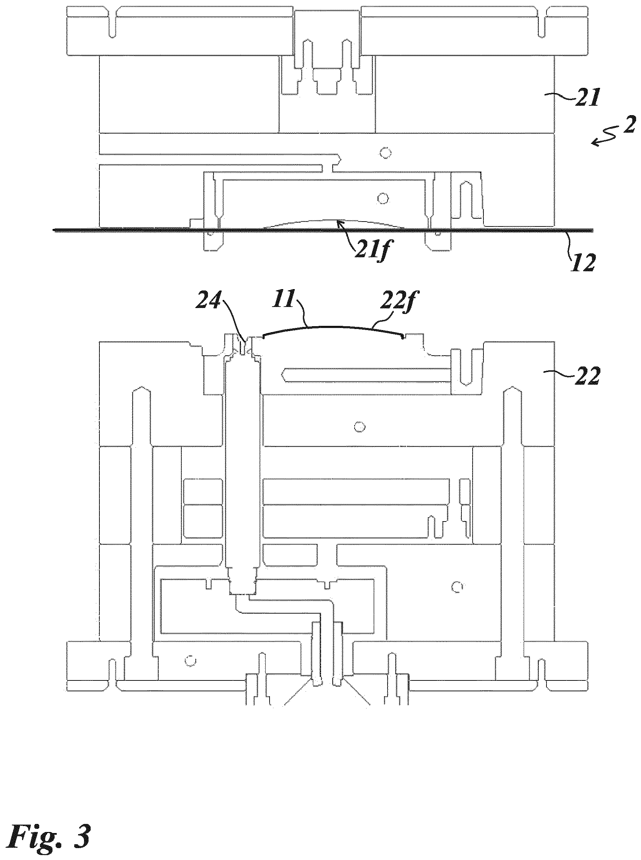

Die Herstellung des Kunststoffformteils 1 erfolgt durch Spritzgießen. Fig. 3 zeigt in schematischer Schnittdarstellung eine Spritzgießvorrichtung 2, die eine erste Werkzeughälfte 21 und eine zweite Werkzeughälfte 22 aufweist. Die erste Werkzeughälfte 21 ist gegenüber der gestellfesten zweiten Werkzeughälfte 22 bewegbar ausgebildet. Beide Werkzeughälften weisen Formflächen 21f bzw. 22f auf, die eine Kavität 23 bilden.

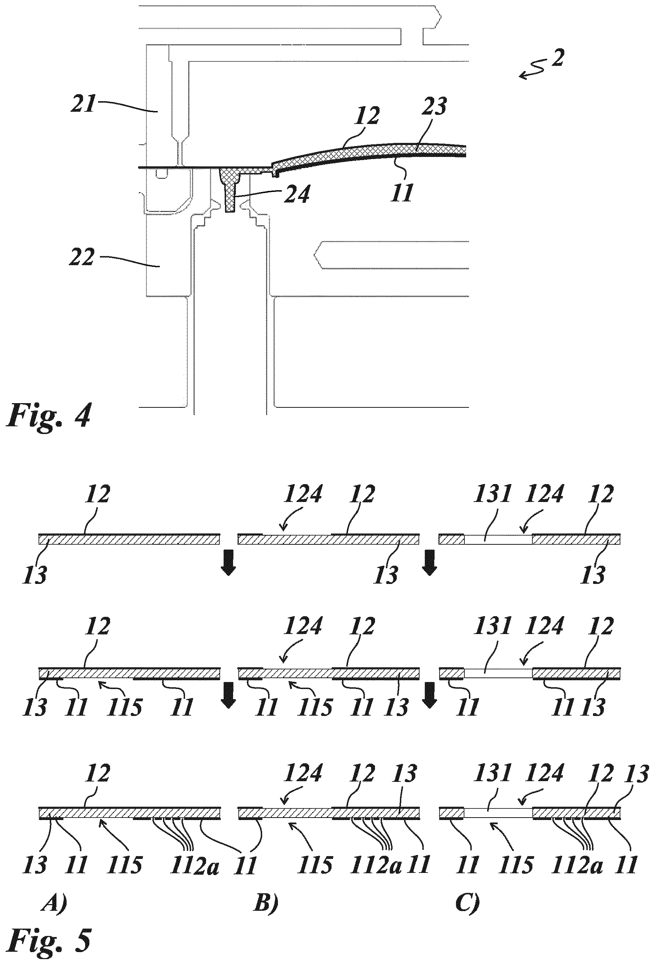

In dem in Fig. 3 und 4 dargestellten Ausführungsbeispiel weist die Formfläche 21f bereichsweise eine negative Krümmung auf, das heißt eine konkave Ausbildung. Die Formfläche 22f weist bereichsweise eine positive Krümmung auf, das heißt eine konvexe Ausbildung. Bei geschlossener Spritzgießform 2 ist zwischen den beiden Formflächen 21f und 22f die Kavität 23 für ein über einen Anspritzkanal 24 einbringbare verflüssigte thermoplastische Kunststoffmasse ausgebildet, wobei die Formflächen 21f und 22f die Außenkontur eines auf diese Weise herstellbaren dekorierten Formteils 1 definieren.

In die erste Werkzeughälfte 12 ist die zweite Dekorfolie 12 eingelegt. In die kernseitige Werkzeughälfte 11 ist die erste Dekorfolie eingelegt. Die zweite Dekorfolie 12 wird in dieser Ausführung als Transferfolie und dabei als Endlosmaterial bereitgestellt und kann mit einer Folienvorschubeinrichtung (nicht dargestellt) durch die Spritzgießvorrichtung 2 geführt sein. Die Folienvorschubeinrichtung kann eine Vorratsrolle für die zweite Dekorfolie 12, eine Aufwickelrolle für die Restfolie, das heißt für die eventuell abgelöste Trägerschicht 121 und auf der Trägerschicht 121 verbliebene Reste der Dekorschicht, eine Transporteinrichtung für den schrittweisen Transport der zweiten Dekorfolie 12 sowie eine Fixiereinrichtung zum Festlegen der zweiten Dekorfolie 12 an der ersten Werkzeughälfte 21 umfassen.

Die erste Dekorfolie 11 wird als Einlegeteil, d.h. als sogenanntes Insert bereitgestellt und in die zweite Werkzeughälfte eingelegt. Die erste Dekorfolie 11 wird hierzu im Tiefziehverfahren insbesondere thermisch vorgeformt und ausgestanzt. Diese vorangehende thermische Verformung ist nicht zwingend erforderlich. Der nachfolgende Kantenbeschnitt kann beispielsweise durch Stanzen, Fräsen, Laserschneiden oder Wasserstrahlschneiden erfolgen. Das technisch anspruchsvolle Verfahren eignet sich für Endlosdekore auf stark dreidimensional verformten Dekorfolien 11. Neben Standarddekoren sind mit einem zusätzlichen Veredelungsschritt spezielle Glanzgrade, höhere Tiefenwirkung und Abriebbeständigkeiten möglich.

Die erste Dekorfolie 11 kann durch Positionsstifte und/oder elektrostatische Kraftwirkung und/oder Vakuumkraft auf der Formfläche 22f fixiert sein. Die Austrittsöffnung des Anspritzkanals 13 ist so positioniert, dass die Kunststoffmasse zwischen die beiden Dekorfolien 11, 12 eintreten kann und sich stoffschlüssig mit beiden Dekorfolien 11, 12 verbindet und so den Grundkörper 13 ausbildet.

Fig. 4 zeigt die Spritzgießvorrichtung 2 mit eingespritzter Kunststoffmasse. Die beiden Dekorfolien 11, 12 sind nun gegen die jeweiligen Formflächen 21f, 22f gepresst und sind mit der eingespritzten Kunststoffmasse stoffschlüssig verbunden. Bei der Kunststoffmasse kann es sich um einen thermoplastischen Kunststoff oder ein thermoplastisches Kunststoffgemisch handeln, beispielsweise Acrylnitril-Butadien-Styrol-Copolimerisat (ABS), Polycarbonat (PC), Polypropylen (PP), Polymethylmethacrylat (PMMA) oder ein Gemisch aus Polycarbonat und Acrylnitril-Butadien-Styrol-Copolimerisat (PC/ABS).

Als Material für die Trägerschicht 111 der ersten Dekorfolie 11 können die vorgenannten Kunststoffe ebenfalls verwendet werden. Dabei sind nicht alle Materialkombinationen geeignet. Es muss sich um Materialkombinationen handeln, die

a) miteinander eine spritzgießtechnische Verbindung eingehen
b) als tiefziehfähige Kunststofffolien herstellbar sind.

In Tabelle 1 sind geeignete Kombinationen der Kunststoffmasse und der Trägerschicht 111 zusammengestellt:

| Kunststoffmasse | Trägerschicht |
|---|---|
| Acrylnitril-Butadien-Styrol-Copolimerisat (ABS) | ABS |
| ABS/Polycarbonat (PC) | ABS |
| PC/ABS | ABS |
| PC | PC |
| Polypropylen (PP) | PP |
| Polymethylmethacrylat (PMMA) | PMMA |

Bevorzugte Verarbeitungstemperaturen sind dabei 200°C bis 300°C. Der benötigte Spritzdruck ist insbesondere abhängig von Teilegröße, Teilegeometrie und Wandstärke und kann in einem großen Bereich schwanken.

Während des Spritzgießens kann ein insbesondere taktiles Oberflächenrelief in die von der Kunststoffmasse abgewandte Oberfläche der zweiten Dekorfolie 12 abgeformt, insbesondere aufgrund einer zwischen der der Dekorlage 122 abgewandten Seite der Trägerfolie 121 und der Wandung 21f der Kavität 23 angeordneten Musterschicht.

Die taktile Struktur bildet sich also während des Spritzgießens, wenn die zweite Dekorfolie 12 aufgrund der Hitze und des Drucks der eingespritzten Kunststoffmasse plastisch verformbar ist. Die Musterschicht kann dabei direkt von der Wandung 21f der Kavität gebildet sein oder durch einen separaten Einleger, insbesondere durch die Trägerfolie 121 selbst, bereitgestellt werden.

Beim Spritzgießen kann ferner zwischen die Dekorfolien 11, 12 zumindest ein Kern in die Kavität 23 eingebracht wird. Hierdurch können Hohlräume oder Aussparungen in das Kunststoffformteil 1 eingebracht werden, die zur Aufnahme von Funktionselementen, beispielsweise Schalter, Regler, Hinterleuchtungsvorrichtungen, separate Anzeigevorrichtungen und/oder Berührungssensoren oder dergleichen dienen können. Der Kern wird dabei bevorzugt durch eine Ausstanzung in der ersten Dekorfolie 11 in den Zwischenraum zwischen den Dekorfolien 11, 12 eingeführt.

Nach dem Spritzgießen kann noch eine mechanische Nachbehandlung erfolgen, bei der das Kunststoffformteil noch beschnitten, befräst, poliert oder dergleichen werden kann. Diese Nachbearbeitung kann auch manuell erfolgen. Ferner können dabei noch die Funktionsteile 114 an der ersten Dekorfolie montiert werden, insbesondere durch Kleben oder Laminieren.

In Fig. 5 sind nochmals mehrere Designvarianten für Kunststoffformteile 1 vergleichend zusammengestellt.

In der Variante gemäß Fig. 5A wird die zweite Dekorfolie 12 vollflächig aufgebracht und weist ein kontinuierliches Design auf. Die zweite Dekorfolie 12 ist dabei dunkel transluzent und matt. Die erste Dekorfolie 11 weist eine Ausstanzung 115 auf, in die beispielsweise ein Display eingesetzt werden kann. In den Bereichen, wo die erste Dekorfolie 11 vorliegt, werden wiederum mittels Laser, Fräsen oder Stanzen die gewünschten Dekorelemente bzw. das gewünschte Dekor eingebracht. Die Dekorfolie 11 kann an der Formfläche 22f mittels eines dort vorgesehenen und in die Aussparung 115 eingreifenden Vorsprungs zusätzlich formschlüssig gehalten werden. Dies kann die Positioniergenauigkeit der Dekorfolie 11 in der Kavität 23 erhöhen, insbesondere bei großflächigen Dekorfolien 11.

In der Variante gemäß Fig. 5B weist auch die zweite Dekorfolie 22 eine Ausstanzung 124 auf, die sich mit der Ausstanzung 115 der ersten Dekorfolie 11 überdeckt. Die zweite Dekorfolie 22 besitzt hier kein kontinuierliches Design, sondern weist ein Einzelbild auf, welches das wenigstens eine Dekorelement und/oder Dekor der ersten Dekorfolie 11 ergänzt.

In der Variante gemäß Fig. 5C weist die zweite Dekorfolie 22 ebenfalls eine Ausstanzung 124 auf, die sich mit der Ausstanzung 115 der ersten Dekorfolie 11 überdeckt. Die zweite Dekorfolie 22 ist hier jedoch wieder ein schwarz-transluzentes, mattes kontinuierliches Design. Im Grundkörper 13 selbst ist dabei eine Ausnehmung 131 für eine Anzeigevorrichtung vorgesehen, die auf die oben beschriebene Weise durch Verwendung eines Kerns beim Spritzgießen eingebracht werden kann.

**Patentansprüche**

1.   Verfahren zum Herstellen eines Kunststoffformteils (1), mit den Schritten:

a) Bereitstellen einer ersten Dekorfolie (11), welche zumindest partiell eine opake Beschichtung (112) aufweist;

b) Einbringen zumindest eines Dekorelements eines Dekors in die erste Dekorfolie (11) durch Bearbeiten mittels eines Bearbeitungswerkzeugs, wobei mittels des Bearbeitungswerkzeugs die opake Beschichtung (112) in einem mittels des Bearbeitungswerkzeugs bearbeiteten Bereich (112a) zumindest teilweise entfernt wird und/oder die Opazität der opaken Beschichtung (112) in einem mittels des Bearbeitungswerkzeugs bearbeiteten Bereich (112a) verringert wird, wobei die opake Beschichtung (112) vor dem Einbringen des mindestens einen Dekorelements durch Bearbeiten mittels des Bearbeitungswerkzeugs eine Transparenz im für den Menschen sichtbaren Wellenlängenbereich von weniger als 50% aufweist, wobei nach Einbringen des Dekors in die erste Dekorfolie (11) der mittels des Bearbeitungswerkzeugs bearbeitete Bereich (112a) und der nicht mittels des Bearbeitungswerkzeugs bearbeitete Bereich (112b) einen Unterschied in der Transparenz von zumindest 5% aufweisen, und wobei das mittels des Bearbeitungswerkzeugs eingebrachte zumindest eine Dekorelement zumindest eine Linie mit einer Linienstärke von mindestens 50 $\mu m$ aufweist;

c) Bereitstellen einer zweiten Dekorfolie (12), welche zumindest bereichsweise transparent oder transluzent ist und eine Transparenz von 5% bis 100% aufweist;

d) Einlegen der Dekorfolien (11, 12) in eine Spritzgussform (2) mit einer ersten (21) und zweiten Formhälfte (22), die gemeinsam eine Kavität (23) zum Abformen des Kunststoffformteils (1) ausbilden, wobei die erste Dekorfolie (11) an einer ersten Wandung (22f) der Kavität (23) und die zweite Dekorfolie (12) an einer zweiten, der ersten Wandung (22f) gegenüber liegenden Wandung (21f) der Kavität (23) angebracht wird;

e) Hinterspritzen der Dekorfolien (11, 12) mit einer Kunststoffmasse, so dass die erste Dekorfolie (11) eine erste, rückseitige Oberfläche und die zweite Dekorfolie (12) eine zweite, der ersten Oberfläche gegenüberliegende, vorderseitige Oberfläche des Kunststoffformteils (1) ausbildet, wobei nach dem Hinterspritzen auf der durch die erste Dekorfolie (11) gebildeten Seite des Kunststoffformteils (11) zumindest eine Hinterleuchtungsvorrichtung angebracht wird.

2.   Verfahren nach Anspruch 1,
**dadurch gekennzeichnet, dass** das Einbringen zumindest eines Dekorelements eines Dekors in die erste Dekorfolie (11) in Schritt b) durch Laserbestrahlung, Fräsen oder Stanzen erfolgt.

3.   Verfahren nach Anspruch 1 oder 2,
**dadurch gekennzeichnet,**
**dass** das zumindest eine Dekorelement vor dem Hinterspritzen, insbesondere vor dem Einlegen der ersten Dekorfolie (11) in die Spritzgussform (2) in die erste Dekorfolie (11) eingebracht wird, oder dass das zumindest eine Dekorelement nach dem Hinterspritzen in die erste Dekorfolie (11) eingebracht wird.

4.   Verfahren nach einem der vorhergehenden Ansprüche,
**dadurch gekennzeichnet,**
**dass** nach Einbringen des Dekors in die erste Dekorfolie (11) der mittels des Bearbeitungswerkzeugs bearbeitete Bereich (112a) und der nicht mittels des Bearbeitungswerkzeugs bearbeitete Bereich (112b) einen Unterschied in der Transparenz von mindestens 10% bis 75% aufweisen.

5.   Verfahren nach einem der vorhergehenden Ansprüche,
**dadurch gekennzeichnet,**

**dass** die opake Beschichtung (112) vor dem Einbringen des mindestens einen Dekorelements durch Bearbeiten mittels des Bearbeitungswerkzeugs eine Transparenz im für den Menschen sichtbaren Wellenlängenbereich von weniger als 20%, bevorzugt von weniger als 5% aufweist, und/oder dass die opake Beschichtung (112) nach dem Einbringen des mindestens einen Dekorelements durch Bearbeiten mittels des Bearbeitungswerkzeugs in dem mittels des Bearbeitungswerkzeugs bearbeiteten Bereich (112a) eine Transparenz im für den Menschen sichtbaren Wellenlängenbereich von mehr als 50 %, insbesondere von mehr als 75 %, aufweist.

6. Verfahren nach einem der vorhergehenden Ansprüche,
   **dadurch gekennzeichnet,**
   **dass** zumindest ein weiteres Dekorelement des Dekors durch Stanzen in die erste Dekorfolie (11) eingebracht wird.

7. Verfahren nach einem der vorhergehenden Ansprüche,
   **dadurch gekennzeichnet,**
   **dass** die erste (11) und/oder zweite Dekorfolie (12) vor dem Einlegen in die Spritzgussform (2) tiefgezogen wird.

8. Verfahren nach einem der vorhergehenden Ansprüche,
   **dadurch gekennzeichnet,**
   **dass** das mittels des Bearbeitungswerkzeugs eingebrachte zumindest eine Dekorelement zumindest eine Linie mit einer Linienstärke von mindestens 0,5 mm aufweist.

9. Verfahren nach einem der vorhergehenden Ansprüche,
   **dadurch gekennzeichnet,**
   **dass** die zweite Dekorfolie (12) eine Trägerschicht (121), eine optionale Ablöseschicht und wenigstens eine Dekorlage (122, 123) aufweist, wobei die Dekorlage (122, 123) insbesondere wenigstens eine hochglänzende oder matte und/oder mit einer taktilen Struktur versehene Schutzlackschicht umfasst und dass die Trägerschicht (121) nach dem Hinterspritzen von der Dekorlage (122, 123) abgezogen wird.

10. Verfahren nach einem der vorhergehenden Ansprüche,
    **dadurch gekennzeichnet,**
    **dass** beim Hinterspritzen ein insbesondere taktiles Oberflächenrelief in die von der Kunststoffmasse abgewandte Oberfläche der zweiten Dekorfolie (12) abgeformt wird, insbesondere aufgrund einer Musterschicht, die zwischen der Wandung der Kavität (21f) und einer Trägerfolie (121) der zweiten Dekorfolie (12) oder der zweiten Dekorfolie (12) angeordnet ist.

11. Verfahren nach einem der vorhergehenden Ansprüche,
    **dadurch gekennzeichnet,**
    **dass** die Dekorfolien (11, 12) mit einem Abstand von 0,5 mm bis 10 mm, bevorzugt von 0,8 mm bis 5 mm in die Spritzgussform (2) eingelegt werden.

12. Verfahren nach einem der vorhergehenden Ansprüche,
    **dadurch gekennzeichnet,**
    **dass** nach dem Hinterspritzen auf der durch die erste Dekorfolie (11) gebildeten Seite des Kunststoffformteils (11) zumindest ein Berührungssensor, angebracht, insbesondere geklebt oder laminiert, wird.

13. Verfahren nach einem der vorhergehenden Ansprüche,
    **dadurch gekennzeichnet,**
    **dass** die erste (11) und/oder zweite Dekorfolie (12) eine oder mehrere elektrische Funktionsschichten aufweist, welche insbesondere eine Hinterleuchtungsvorrichtung oder ein oder mehrere Berührungssensoren, insbesondere kapazitive Berührungssensoren, aufweist.

14. Kunststoffformteil (1), insbesondere gefertigt mit einem Verfahren nach einem der vorhergehenden Ansprüche, mit einer ersten Dekorfolie (11), welche zumindest partiell eine opake Beschichtung (112) aufweist, in welche durch Bearbeiten mittels eines Bearbeitungswerkzeugs, insbesondere eines Lasers, eines Fräswerkzeugs oder eines Stanzwerkzeugs, zumindest ein Dekorelement eines Dekors eingebracht ist, sowie mit einer zweiten Dekorfolie (12), welche zumindest bereichsweise transparent oder transluzent ist und eine Transparenz von 5% bis 100% aufweist, wobei die erste Dekorfolie (11) eine erste, rückseitige Oberfläche und die zweite Dekorfolie (12) eine zweite, der ersten Oberfläche gegenüberliegende, vorderseitige Oberfläche des Kunststoffformteils (1) ausbildet; und wobei durch das Einbringen des mindestens einen Dekorelements in die erste Dekorfolie (11) durch Bearbeiten mittels des Bearbeitungswerkzeugs die opake Beschichtung (112) in einem mittels des Bearbeitungswerkzeugs bearbeiteten Bereich (112a) zumindest teilweise entfernt ist und/oder die Opazität der opaken Beschichtung (112) in einem mittels des Bearbeitungswerkzeugs bearbeiteten Bereich (112a) verringert ist, wobei die opake Beschichtung (112) in dem nicht mittels des Bearbeitungswerkzeugs bearbeiteten Bereich (112b) eine Transparenz im für den Menschen sichtbaren Wellenlängenbereich von weniger als 50% aufweist, wobei durch das Einbringen des mindestens einen Dekorelements in die erste Dekorfolie (11) der mittels des Bearbeitungswerkzeugs bearbeitete Bereich (112a) und der nicht mittels des Bearbeitungswerkzeugs bearbeitete Bereich (112b) einen Unterschied in der Transparenz von zumindest 5 % aufweisen, wobei das durch Bearbeiten mittels des Bearbeitungswerkzeugs eingebrachte zumindest eine Dekorelement zumindest eine Linie mit einer Linienstärke von mindestens 50 µm aufweist, und wobei auf der durch die erste Dekorfolie (11) gebildeten Seite des Kunststoffformteils (1) zumindest eine Hinterleuchtungsvorrichtung angebracht ist.

**Claims**

1. Method for producing a plastic moulded part (1), having the following steps:

   a) providing a first decorative film (11) which at least partially has an opaque coating (112);

   b) introducing at least one decorative element of a decoration into the first decorative film (11) by processing by means of a processing tool, wherein, by means of the processing tool, the opaque coating (112) is at least partially removed in a region (112a) processed by means of the processing tool, and/or the opacity of the opaque coating (112) is reduced in a region (112a) processed by means of the processing tool, wherein the opaque coating (112) has a transparency in the wavelength region that is visible to the human eye of less than 50% before the introduction of the at least one decorative element by processing by means of the processing tool, wherein, after the introduction of the decoration into the first decorative film (11), the region (112a) processed by means of the processing tool and the region (112b) not processed by means of the processing tool have a difference in transparency of at least 5%, and wherein the at least one decorative element introduced by means of the processing tool has at least one line with a line thickness of at least 50 µm;

   c) providing a second decorative film (12) which is at least regionally transparent or translucent and has a transparency of 5% to 100%;

   d) placing the decorative films (11, 12) into an injection mould (2) having a first (21) and second mould half (22), which together form a cavity (23) for moulding the plastic moulded part (1), wherein the first decorative film (11) is attached to a first wall (22f) of the cavity (23), and the second decorative film (12) is attached to a second wall (21f) of the cavity (23), which lies opposite the first wall (22f);

   e) back-injecting the decorative films (11, 12) with a plastic compound, such that the first decorative film (11) forms a first rear-side surface and the second decorative film (12) forms a second front-side surface of the plastic moulded part (1), which lies opposite the first surface, wherein, after back-injecting, at least one backlighting device is attached to the side of the plastic moulded part (11) formed by the first decorative film (11).

2. Method according to claim 1,
   **characterised in that** the introduction of at least one decorative element of a decoration into the first decorative film (11) takes place in step b) by means of laser irradiation, milling or stamping.

3. Method according to claim 1 or 2,
   **characterised in that**
   the at least one decorative element is introduced into the first decorative film (11) before back-injecting, in particular before placing the decorative film (11) into the injection mould (2), or the at least one decorative element is introduced into the first decorative film (11) after back-injecting.

4. Method according to one of the preceding claims,
   **characterised in that**,
   after introducing the decoration into the first decorative film (11), the region (112a) processed by means of the processing tool and the region (112b) not processed by means of the processing tool have a difference in transparency of at least 10% to 75%.

5. Method according to one of the preceding claims,
   **characterised in that**,
   before introducing the at least one decorative element by processing by means of the processing tool, the opaque coating (112) has a transparency in the wavelength range that is visible to the human eye of less than 20%, preferably less than 5%, and/or, after introducing the at least one decorative element by processing by means of the processing tool in the region (112a) processed by means of the processing tool, the opaque coating (112) has a transparency in the wavelength range visible to the human eye of more than 50%, in particular more than 75%.

6. Method according to one of the preceding claims,
   **characterised in that**
   at least one further decorative element of the decoration is introduced into the first decorative film (11) by stamping.

7. Method according to one of the preceding claims,
   **characterised in that**
   the first (11) and/or second decorative film (12) is deep-drawn before being placed into the injection mould (2).

8. Method according to one of the preceding claims,
   **characterised in that**
   the at least one decorative element introduced by means of the processing tool has at least one line having a line thickness of at least 0.5 mm.

9. Method according to one of the preceding claims,
   **characterised in that**
   the second decorative film (12) has a carrier layer (121), an optional detachment layer and at least one decorative ply (122, 123), wherein the decorative ply (122, 123) comprises, in particular, at least one protective lacquer layer which is high-gloss or matt and/or is provided with a tactile structure, and the carrier layer (121) is removed from the decorative ply (122, 123) after back-injecting.

10. Method according to one of the preceding claims,
    **characterised in that**,
    when back-injecting, an in particular tactile surface relief is moulded into the surface of the second decorative film (12) which faces away from the plastic compound, in particular because of a pattern layer, which is arranged between the wall of the cavity (21f) and a carrier film (121) of the second decorative film (12) or the second decorative (12).

11. Method according to one of the preceding claims,
    **characterised in that**
    the decorative films (11, 12) are placed into the injection mould (2) with a gap of 0.5 mm to 10 mm, preferably of 0.8 mm to 5 mm.

12. Method according to one of the preceding claims,
    **characterised in that**,
    after back-injecting, at least one touch sensor is attached, in particular adhered or laminated, on the side of the plastic moulded part (11) formed by the first decorative film (11).

13. Method according to one of the preceding claims,
    **characterised in that**
    the first (11) and/or second decorative film (12) has one or more electrical functional layers, which have, in particular, a background lighting device or one or more touch sensors, in particular capacitive touch sensors.

14. Plastic moulded part (1), in particular produced by a method according to one of the preceding claims, having a first decorative film (11), which at least partially has an opaque coating (112), into which at least one decorative element of a decoration is introduced by processing by means of a processing tool, in particular a laser, a milling tool or a stamping tool, and having a second decorative film (12), which is at least regionally transparent or translucent and has a transparency of 5% to 100%, wherein the first decorative film (11) forms a first rear-side surface and the second decorative film (12) forms a second front-side surface of the plastic moulded part (1), which is opposite the first surface; and wherein, by introducing the at least one decorative element into the first decorative film (11) by processing by means of the processing tool, the opaque coating (112) is at least partially removed in a region (112a) processed by means of the processing tool and/or the opacity of the opaque coating (112) is reduced in a region (112a) processed by means of the processing tool, wherein, in the region (112b) that is not processed by means of the processing tool, the opaque coating (112) has a transparency in the wavelength range that is visible to the human eye of less than 50%, wherein, by introducing the at least one decorative element into the first decorative film (11), the region (112a) processed by means of the processing tool and the region (112b) not processed by means of the processing tool have a difference in transparency of at least 5%, wherein the at least one decorative element introduced by processing by means of the processing tool has at least one line with a line thickness of at least 50 μm, and wherein at least one background lighting device is attached on the side of the plastic moulded part (1) that is formed by the first decorative film (11).

**Revendications**

1. Procédé de production d'un moulage plastique (1), comportant les étapes de :

a) mise à disposition d'un premier film décoratif (11) qui présente au moins partiellement un revêtement opaque (112) ;

b) insertion d'au moins un élément décoratif d'un décor dans le premier film décoratif (11) par traitement au moyen d'un outil de traitement, dans lequel au moyen de l'outil de traitement, le revêtement opaque (112) est éliminé au moins partiellement dans une zone (112a) traitée au moyen de l'outil de traitement et/ou l'opacité du revêtement opaque (112) est réduite dans une zone (112a) traitée au moyen de l'outil de traitement, dans lequel le revêtement opaque (112) présente, avant l'insertion de l'au moins un élément décoratif par traitement au moyen de l'outil de traitement, une transparence dans la plage de longueurs d'onde visible pour l'être humain de moins de 50 %, dans lequel après l'insertion du décor dans le premier film décoratif (11), la zone (112a) traitée au moyen de l'outil de traitement et la zone (112b) non traitée au moyen de l'outil de traitement présentent une différence de transparence d'au moins 5 %, et dans lequel l'au moins un élément décoratif inséré au moyen de l'outil de traitement présente au moins une ligne avec une épaisseur de ligne d'au moins 50 μm ;

c) mise à disposition d'un deuxième film décoratif (12) qui est transparent ou translucide au moins par endroits et présente une transparence de 5 % à 100 % ;

d) placement du film décoratif (11, 12) dans un moule à injection (2) comportant une première (21) et une deuxième moitié de moule (22), qui forment conjointement une cavité (23) pour le moulage du moulage plastique (1), dans lequel le premier film décoratif (11) est apposé sur une première paroi (22f) de la cavité (23) et le deuxième film décoratif (12) est apposé sur une deuxième paroi (21f) opposée à la première paroi (22f) de la cavité (23) ;

e) injection arrière du film décoratif (11, 12) avec une masse plastique de sorte que le premier film décoratif (11) forme une première surface arrière et que le deuxième film décoratif (12) forme une deuxième surface avant du moulage plastique (1), opposée à la première surface, dans lequel après l'injection arrière sur le côté du moulage plastique (11) formé par le premier film décoratif (11) au moins un dispositif d'éclairage arrière est apposé.

2. Procédé selon la revendication 1,
**caractérisé en ce que** l'insertion d'au moins un élément décoratif d'un décor dans le premier film décoratif (11) de l'étape b) s'effectue par irradiation laser, fraisage ou estampage.

3. Procédé selon la revendication 1 ou 2,
**caractérisé en ce que**
l'au moins un élément décoratif est inséré avant l'injection arrière, en particulier avant le placement du premier film décoratif (11) dans le moule à injection (2) dans le premier film décoratif (11), ou **en ce que** l'au moins un élément décoratif est inséré après l'injection arrière dans le premier film décoratif (11).

4. Procédé selon l'une des revendications précédentes,
**caractérisé en ce que**
après l'insertion du décor dans le premier film décoratif (11), la zone (112a) traitée au moyen de l'outil de traitement et la zone (112b) non traitée au moyen de l'outil de traitement présentent une différence de transparence d'au moins 10 % à 75 %.

5. Procédé selon l'une des revendications précédentes,
**caractérisé en ce que**
le revêtement opaque (112) présente avant l'insertion de l'au moins un élément décoratif par traitement au moyen de l'outil de traitement, une transparence dans la plage de longueurs d'onde visible pour l'être humain de moins de 20 %, de préférence de moins de 5 %, et/ou **en ce que** le revêtement opaque (112) présente après l'insertion de l'au moins un élément décoratif par traitement au moyen de l'outil de traitement dans la zone (112a) traitée au

14

moyen de l'outil de traitement, une transparence dans la plage de longueurs d'onde visible pour l'être humain de plus de 50 %, en particulier de plus de 75 %.

6. Procédé selon l'une des revendications précédentes,
   **caractérisé en ce que**
   l'au moins un autre élément décoratif du décor est inséré par estampage dans le premier film décoratif (11) .

7. Procédé selon l'une des revendications précédentes,
   **caractérisé en ce que**
   le premier (11) et/ou deuxième film décoratif (12) est embouti avant le placement dans le moule à injection (2) .

8. Procédé selon l'une des revendications précédentes,
   **caractérisé en ce que**
   l'au moins un élément décoratif inséré au moyen de l'outil de traitement présente au moins une ligne ayant une épaisseur de ligne d'au moins 0,5 mm.

9. Procédé selon l'une des revendications précédentes,
   **caractérisé en ce que**
   le deuxième film décoratif (12) présente une couche de support (121), une couche de détachement optionnelle et au moins une feuille décorative (122, 123), dans lequel la feuille décorative (122, 123) comprend en particulier au moins une couche de vernis de protection à haute brillance ou mate et/ou dotée d'une structure tactile et **en ce que** la couche de support (121) est retirée après l'injection arrière de la feuille décorative (122, 123).

10. Procédé selon l'une des revendications précédentes,
    **caractérisé en ce que**
    lors de l'injection arrière, un relief de surface en particulier tactile est moulé dans la surface détournée de la masse plastique du deuxième film décoratif (12), en particulier sur la base d'une couche à motif qui est disposée entre la paroi de la cavité (21f) et un film de support (121) du deuxième film décoratif (12) ou du deuxième film décoratif (12).

11. Procédé selon l'une des revendications précédentes,
    **caractérisé en ce que**
    le film décoratif (11, 12) est placé avec une distance de 0,5 mm à 10 mm, de préférence de 0,8 mm à 5 mm dans le moule à injection (2).

12. Procédé selon l'une des revendications précédentes,
    **caractérisé en ce que**
    après l'injection arrière sur le côté du moulage plastique (11) formé par le premier film décoratif (11), au moins un capteur tactile est aménagé, en particulier collé ou stratifié.

13. Procédé selon l'une des revendications précédentes,
    **caractérisé en ce que**
    le premier (11) et/ou deuxième film décoratif (12) présente une ou plusieurs couches fonctionnelles électriques qui présentent en particulier un dispositif d'éclairage arrière ou un ou plusieurs capteurs tactiles, en particulier des capteurs tactiles capacitifs.

14. Moulage plastique (1), en particulier réalisé avec un procédé selon l'une des revendications précédentes, comportant un premier film décoratif (11) qui présente au moins partiellement un revêtement opaque (112) dans lequel par traitement au moyen d'un outil de traitement, en particulier d'un laser, un outil de fraisage ou un outil d'estampage, au moins un élément décoratif d'un décor est inséré, ainsi qu'un deuxième film décoratif (12) qui est transparent ou translucide au moins par endroits et présente une transparence de 5 % à 100 %, dans lequel le premier film décoratif (11) forme une première surface arrière et le deuxième film décoratif (12) forme une deuxième surface avant du moulage plastique (1) opposée à la première surface ; et dans lequel par insertion de l'au moins un élément décoratif dans le premier film décoratif (11) par traitement au moyen de l'outil de traitement, le revêtement opaque (112) est retiré dans une zone (112a) traitée au moyen de l'outil de traitement au moins partiellement et/ou l'opacité du revêtement opaque (112) est réduite dans une zone (112a) traitée au moyen de l'outil de traitement, dans lequel le revêtement opaque (112) présente dans la zone (112b) non traitée au moyen de l'outil de traitement, une transparence dans la plage de longueurs d'onde visible pour l'être humain de moins de 50 %, dans lequel par l'insertion de l'au moins un élément décoratif dans le premier film décoratif (11), la zone (112a) traitée au moyen de l'outil de traitement et la zone (112b) non traitée au moyen de l'outil de traitement présentent une différence de transparence d'au moins 5 %, dans lequel l'au moins un élément décoratif inséré par traitement au moyen de l'outil de traitement présente au moins une ligne avec une épaisseur de ligne d'au moins 50 $\mu$m, et dans lequel sur le côté formé par le premier film décoratif (11) du moulage plastique (1), au moins un dispositif d'éclairage arrière est apposé.

**Fig. 1**

**Fig. 2**

**Fig. 3**

**Fig. 4**

A)  B)  C)

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030122278 A1